# EUROPÄISCHE PATENTSCHRIFT

(11) **EP 2 801 786 B1**
(45) Veröffentlichungstag und Bekanntmachung des Hinweises auf die Patenterteilung: **02.01.2019**
(21) Anmeldenummer: 13167070.5
(22) Anmeldetag: 08.05.2013
(51) Int. Cl.: G01D 5/26, G01B 11/02

(54) **Optoelektronischer Sensor und Verfahren zur Erkennung von Objektkanten**
Opto-electronic sensor and method for detecting object edges
Capteur optoélectronique et procédé pour la détection de bords d'objets

(43) Veröffentlichungstag der Anmeldung: 12.11.2014
(73) Patentinhaber: Sick AG, 79183 Waldkirch/Breisgau (DE)
(72) Erfinder: Merettig, Gerhard, 79350 Sexau (DE); Bergbach, Roland, 79364 Malterdingen (DE); Schönstein, Matthias, 79108 Freiburg (DE); Hörsch, Ingolf, 79102 Freiburg (DE); Götz, Matthias, 79110 Freiburg (DE); Bohli, Alexander, 79189 Bad Krozingen (DE)
(74) Vertreter: Manitz Finsterwald Patentanwälte PartmbB

(56) Entgegenhaltungen:
- EP-A1- 2 530 426
- EP-A2- 1 039 261
- DE-A1-102009 012 997
- DE-A1-102010 022 273

## Beschreibung

Die vorliegende Erfindung betrifft einen optoelektronischen Sensor zur Erkennung von Objektkanten von Objekten.

Optoelektronische Sensoren werden häufig dazu eingesetzt, in einer Fördereinrichtung transportierte Objekte wie z.B. Getränkekartons anhand der Objektkanten zu erkennen, damit eine nachfolgende Weiterverarbeitung wie z.B. eine Applikation eines Strohhalms in korrekter Weise erfolgen kann. In der Regel sind die geförderten Objekte jedoch nicht vereinzelt, sondern folgen so dicht aufeinander, dass beim Vorbeiführen der Objekte am Sensor der Übergang von einem Objekt zum nächsten Objekt nur schwer zu erkennen ist.

Um bei dicht aufeinander folgenden Objekten die schmale Lücke zwischen zwei Objekten zu erkennen, kann eine Beleuchtung der Objekte durch zwei separate Lichtsender, eine Detektion durch zwei separate Lichtempfänger und eine anschließende Differenzbildung der einzelnen Signale erfolgen, was auch als energetisches Wägeverfahren bezeichnet wird. Alternativ kann ein einzelner ortsauflösender Lichtempfänger dazu eingesetzt werden, den Abstand des Sensors von den Vorderflächen der Objekte zu ermitteln, beispielsweise mittels Triangulation. Bei Verwendung zweier voneinander beabstandeter Lichtsender kann der Sensor einen Übergang zwischen zwei aufeinanderfolgenden Objekten anhand eines Abstandsunterschieds erkennen. Dies kann als Abstandsdifferenzverfahren bezeichnet werden. Optoelektronische Sensoren, welche solchermaßen energetische Wägeverfahren und/oder Abstandsdifferenzverfahren zur Erkennung von Objektkanten anwenden, sind in der Offenlegungsschrift DE 10 2010 022 273 A1 angegeben.

US2002/024677 offenbart ein optoelektronischer Sensor zur Erkennung von Objektkanten von Objekten, mit wenigstens drei Laser-Lichtsendern zur Erzeugung jeweiliger kollimierter oder fokussierter Sendelichtstrahlen, wobei die Lichtsender derart angeordnet sind, dass sich wenigstens zwei unterschiedliche Abstände zwischen zwei jeweiligen Lichtsendern der wenigstens drei Lichtsender ergeben, mit wenigstens einem Lichtempfänger zur Aufnahme von durch die Sendelichtstrahlen auf einem Objekt erzeugten Lichtflecken, und mit einer Auswerteeinheit, welche dazu ausgebildet ist, zum Erkennen einer Objektkante eine gemeinsame Bewertung die durch dem Lichtempfänger aufgenommenen Abbilds der durch die Sendelichtstrahlen der Lichtsendern erzeugten Lichtflecken durchzuführen.

Die EP 2 530 426 A1 offenbart eine Vorrichtung zur optischen Vermessung von Objekten, wobei eine Beleuchtung des jeweiligen Objekts mit mehreren divergenten Lichtquellen sowie eine Auswertung der verschiedenen durch das Objekt erzeugten Schattenwürfe mittels eines ortsauflösenden Detektors vorgesehen ist. Eine Manipulationseinheit dient dazu, das Objekt in verschiedene Stellungen zu bewegen.
Die DE 10 2009 012 997 A1 sieht eine Objektkantenerkennung mittels zweier Leuchtdioden und eines streifenförmigen Fotodetektors vor. Die Vermessung beruht auf einer Analyse der Schattenwurfbegrenzungen.
Die EP 1 039 261 A2 offenbart einen Objektkantendetektor, der auf einem durch eine lineare Anordnung von kollimierten Lichtquellen erzeugten Lichtvorhang beruht. Der linearen Lichtquellenanordnung gegenüberliegend ist eine ebenfalls lineare Detektoranordnung vorgesehen. Wenn ein Objekt in den Freiraum zwischen der Lichtquellenanordnung und der Fotodetektoranordnung gelangt, sind die Übergänge zwischen abgeschatteten Bereichen und nicht abgeschatteten Bereichen direkt ermittelbar.
Die Zuverlässigkeit von Sensoren, welche ein energetisches Wägeverfahren einsetzen, ist relativ stark vom Krümmungsradius der Objektkanten abhängig. Das Abstandsdifferenzverfahren versagt hingegen bei exakt gleich ausgerichteten Objektvorderflächen. Daher ist insbesondere in solchen Anwendungen, in welchen stark abgerundete Objekte entlang einer Längsführung geführt gefördert werden, eine Kantenerkennung mittels optoelektronischer Sensoren nur unter erhöhtem Aufwand möglich.

Es ist eine Aufgabe der Erfindung, einen kantenerkennenden optoelektronischen Sensor anzugeben, welcher flexiblere Einsatzmöglichkeiten aufweist.

Die Lösung der Aufgabe erfolgt durch einen optoelektronischen Sensor mit den Merkmalen des Anspruchs 1.

Erfindungsgemäß umfasst ein optoelektronischer Sensor wenigstens drei Lichtsender zur Erzeugung jeweiliger kollimierter oder fokussierter Sendelichtstrahlen, wobei die Lichtsender derart angeordnet sind, dass sich wenigstens zwei unterschiedliche Abstände zwischen zwei jeweiligen Lichtsendern der wenigstens drei Lichtsender ergeben, wenigstens einen Lichtempfänger zur Aufnahme von durch die Sendelichtstrahlen auf einem Objekt erzeugten Lichtflecken und eine Auswerteeinheit. Die Auswerteeinheit ist dazu ausgebildet, zum Erkennen einer Objektkante eine gemeinsame Bewertung eines durch einen Lichtempfänger aufgenommenen Abbildes eines durch die Sendelichtstrahlen eines ersten Lichtsenders der wenigstens drei Lichtsender erzeugten Lichtflecks und eines durch einen Lichtempfänger aufgenommenen Abbilds eines durch die Sendelichtstrahlen eines anderen Lichtsenders der wenigstens drei Lichtsender erzeugten Lichtflecks durchzuführen, wobei das für die gemeinsame Bewertung heranzuziehende Paar von Lichtsendern in Abhängigkeit von einem Auswahlkriterium aus wenigstens zwei unterschiedlich beabstandeten Paaren von Lichtsendern auswählbar ist. Es kann hierbei durch die Auswerteeinheit insbesondere eine gemeinsame Bewertung jeweiliger durch ein und denselben Lichtempfänger aufgenommener Abbilder der durch die Sendelichtstrahlen der beiden Lichtsender erzeugten Lichtflecke erfolgen.

Alternativ können die Abbilder der beiden Lichtsender auf gegebenenfalls vorhandenen unterschiedlichen Lichtempfängern zur Auswertung herangezogen werden.

Die gemeinsame Bewertung kann insbesondere mit einem energetischen Wägeverfahren oder einem Abstandsdifferenzverfahren oder einer Kombination dieser Verfahren durchgeführt werden, wie sie in DE 10 2010 022 273 A1 beschrieben sind.

Bei den Lichtsendern kann es sich um vollständig voneinander getrennte Lichtquellen handeln oder um eine einzelne Lichtquelle, welche mittels einer Vorsatzoptik, wie zum Beispiel einer Blendenanordnung, mehrere voneinander beabstandete Sendestrahlbündel erzeugt. Der oder die Lichtempfänger kann/können ortsauflösend sein, um so eine Abstandsmessung mittels Triangulation zu ermöglichen. Alternativ können auch zwei Lichtempfänger auf zwei einander gegenüber liegenden Seiten der Lichtsender angeordnet sein, um eine Kantendetektion mittels des vorstehend genannten energetischen Wägeverfahrens zu ermöglichen. Es könnte auch eine Kombination aus wenigstens einem ortsauflösenden Lichtempfänger und wenigstens zwei energiedetektierenden Lichtempfängern vorgesehen sein.

Dadurch dass wenigstens zwei verschiedene Abstände zwischen getrennten Lichtsendern auswählbar sind, kann der optoelektronische Sensor an die Vorgaben einer bestimmten Anwendung angepasst werden. Das Auswählen an sich kann hierbei mittels einer dauerhaften, vor dem Ersteinsatz vorgenommenen Konfiguration des optoelektronischen Sensors erfolgen, beispielsweise mittels Steckbrücken oder eines DIP-Schalters. Somit ist es beispielsweise möglich, den größeren der beiden unterschiedlichen Abstände auszuwählen, falls abzusehen ist, dass die zu erkennenden Objektkanten einen relativ großen Krümmungsradius aufweisen. Umgekehrt kann der kleinere der beiden unterschiedlichen Abstände ausgewählt werden, wenn die zu erkennenden Objektkanten einen vergleichsweise kleinen Krümmungsradius aufweisen. Auch bei Einsatz des Abstandsdifferenzverfahrens ist es günstig, im Falle stark abgerundeter Kanten einen möglichst großen Abstand zwischen den Lichtsendern des Paars von Lichtsendern auszuwählen, da dann auch die Lücke zwischen den geraden Vorderflächen zweier aufeinanderfolgender Objekte vergleichsweise groß ist. Im Ergebnis ermöglicht die Erfindung so einen zuverlässigen Betrieb eines kantendetektierenden optoelektronischen Sensors in unterschiedlichen Anwendungssituationen.

Weiterbildungen der Erfindung sind in den abhängigen Ansprüchen, der Beschreibung sowie der beigefügten Zeichnung angegeben.

Der Sensor kann dazu ausgebildet sein, zum Erkennen einer Objektkante gleichzeitig oder nacheinander jeweilige gemeinsame Bewertungen für wenigstens zwei unterschiedlich beabstandete Paare von Lichtsendern durchzuführen. Beispielsweise können zu diesem Zweck alle Lichtsender zeitlich alternierend angesteuert werden. Es ist dann keine manuelle Voreinstellung, beispielsweise mittels DIP-Schalter, notwendig, um den Sensor anzupassen. Die Anpassung kann vielmehr dynamisch erfolgen, z.B. auf elektronischem Wege innerhalb der Auswerteeinheit.

Gemäß einer speziellen Ausgestaltung ist der Sensor dazu ausgebildet, in Abhängigkeit von dem Auswahlkriterium lediglich eine der durchgeführten gemeinsamen Bewertungen zur Erkennung einer Objektkante heranzuziehen. Somit kann die für die jeweilige Anwendung günstigste gemeinsame Bewertung zur letztendlichen Erkennung der Objektkante herangezogen werden.

Der Sensor kann jedoch auch dazu ausgebildet sein, jede der durchgeführten gemeinsamen Bewertungen zur Erkennung einer Objektkante heranzuziehen. Das heißt die Ergebnisse aller durchgeführten gemeinsamen Bewertungen werden genutzt.

Insbesondere kann der Sensor dazu ausgebildet sein, die Erkennung einer Objektkante anhand einer logischen Verknüpfung der beiden für die zwei unterschiedlich beabstandeten Paare von Lichtsendern durchgeführten gemeinsamen Bewertungen vorzunehmen. Hierdurch kann eine besonders robuste Objekterkennung erzielt werden. Die Art der logischen Verknüpfung kann bei Bedarf an den geplanten Einsatzzweck angepasst sein.

Das Auswahlkriterium kann einen erwarteten Krümmungsradius einer Objektkante und/oder ein anhand der Empfangsintensitäten der durch den Lichtempfänger aufgenommenen Abbilder der Lichtflecke erzeugtes Gütesignal umfassen. Der erwartete Krümmungsradius der Objektkanten ist für eine vorgegebene Anwendung meistens bekannt. Es ist günstig, den Abstand der Lichtsender an diesen erwarteten Krümmungsradius anzupassen, insbesondere derart, dass der Abstand und der Krümmungsradius in der gleichen Größenordnung liegen. Unter Verwendung eines Gütesignals ist es zum Beispiel möglich, dasjenige Detektionssignal zur Kantenerkennung heranzuziehen, das die höchste Signalstärke aufweist. Prinzipiell kann das Auswahlkriterium auch in einer komplexen Verknüpfung mehrerer Größen wie dem erwarteten Krümmungsradius und der Signalstärke bestehen.

Eine weitere Ausführungsform der Erfindung sieht vor, dass wenigstens vier und vorzugsweise genau vier voneinander beabstandete Lichtsender vorgesehen sind, wobei die Auswerteeinheit in der Lage ist, für wenigstens zwei unterschiedlich beabstandete Paare von Lichtsendern eine jeweilige gemeinsame Bewertung durchzuführen. Eine größere Anzahl von Lichtsendern ermöglicht mehr Auswahlmöglichkeiten unter verschiedenen Abständen für einzelne Paare von Lichtsendern und somit für eine feiner abgestufte Anpassung des Sensors an unterschiedliche Anwendungsverhältnisse. Aus Kostengründen ist es jedoch bevorzugt, keine übermäßig große Anzahl von Lichtsendern vorzusehen.

Es kann vorgesehen sein, dass die Lichtsender auf einer, vorzugsweise geraden, Linie angeordnet sind, wobei die Linie insbesondere quer zu einer erwarteten Objektkante verläuft. Auf diese Weise ist es möglich, den Krümmungsverlauf der Objektkante in optimaler Weise abzutasten.

Die Lichtsender sind vorzugsweise in einem gleichmäßigen Abstand auf der Linie angeordnet. Für den Abstand zwischen den Lichtsendern des für die gemeinsame Bewertung heranzuziehenden Paars von Lichtsendern ist somit eine ausgewogene Abstufung möglich.

Eine weitere Ausführungsform der Erfindung sieht vor, dass jedem der wenigstens drei Lichtsender eine separate Sendeoptik, insbesondere Sendelinse, zugeordnet ist. Dies ermöglicht eine besonders große Flexibilität hinsichtlich der Anordnung der einzelnen Lichtsender.

Alternativ kann den wenigstens drei Lichtsendern eine gemeinsame Sendeoptik, insbesondere Sendelinse, zugeordnet sein. Diese Ausführungsform zeichnet sich durch einen besonders geringen Herstellungsaufwand aus. Die Sendeoptik kann telezentrisch angeordnet sein.

Die Fertigungskosten können dadurch gesenkt werden, dass die wenigstens drei Lichtsender durch jeweilige Halbleiter-Lichtquellen gebildet sind, welche auf einem gemeinsamen Halbleiterkristall bzw. einem gemeinsamen Chip angeordnet sind. Hierdurch kann überdies eine besonders hohe Präzision bezüglich der Position der durch die einzelnen Lichtsender erzeugten Lichtflecke erzielt werden. Ein derartiger Halbleiter-Chip kann insbesondere als Sägevariante eines standardmäßigen LED-Chips ausgeführt sein.

Die Lichtempfänger können ortsauflösend sein und die Auswerteeinheit kann dafür ausgebildet sein, die mittels Triangulation aus den Lagen der durch die zwei Lichtempfänger aufgenommenen zwei Abbilder des jeweiligen Lichtflecks bestimmten zwei Abstände miteinander zu verrechnen und das Ergebnis der jeweiligen Verrechnung zu bewerten. Alternativ oder zusätzlich kann das vorstehend erwähnte energetische Wägeverfahren angewendet werden.

Eine weitere Ausführungsform der Erfindung sieht vor, dass der Sensor dazu ausgebildet ist, die wenigstens drei Lichtsender alternierend anzusteuern. Hierdurch ist eine zuverlässige Trennung der einzelnen Detektionskanäle möglich.

Die Lösung der Aufgabe erfolgt auch durch ein Verfahren zur Erkennung von Objektkanten von Objekten mit den Merkmalen des Anspruchs 14.

Bei einem erfindungsgemäßen Verfahren werden gleichzeitig oder nacheinander wenigstens zwei Lichtflecke auf einem Objekt erzeugt. Die Abbilder der erzeugten Lichtflecke werden mittels wenigstens eines Lichtempfängers aufgenommen und ein durch einen Lichtempfänger aufgenommenes Abbild eines ersten Lichtflecks der wenigstens zwei Lichtflecke sowie ein durch einen Lichtempfänger aufgenommenes Abbild eines anderen Lichtflecks der wenigstens zwei Lichtflecke werden gemeinsam bewertet, wobei die Lichtflecke durch ein Paar von Lichtsendern einer Anordnung von wenigstens drei Lichtsendern erzeugt werden, welche derart angeordnet sind, dass sich wenigstens zwei unterschiedliche Abstände zwischen zwei jeweiligen Lichtsendern der wenigstens drei Lichtsender ergeben. Das Paar von Lichtsendern wird in Abhängigkeit von einem Auswahlkriterium aus wenigstens zwei unterschiedlich beabstandeten Paaren von Lichtsendern ausgewählt.

Die gemeinsame Bewertung kann insbesondere mit einem energetischen Wägeverfahren oder einem Abstandsdifferenzverfahren oder einer Kombination dieser Verfahren durchgeführt werden, wie sie in DE 10 2010 022 273 A1 beschrieben sind.

Die Erfindung beruht insbesondere auf der Erkenntnis, dass sich durch Auswahl eines Lichtsenderabstands aus wenigstens zwei verfügbaren unterschiedlichen Lichtsenderabständen mit einfachen Mitteln eine Anpassung einer Kantenerkennung an verschiedene Krümmungsradien durchführen lässt.

Es kann vorgesehen sein, dass für wenigstens zwei unterschiedlich beabstandete Paare von Lichtflecken eine jeweilige gemeinsame Bewertung durchgeführt wird und in Abhängigkeit von einem Auswahlkriterium lediglich eine der für die wenigstens zwei unterschiedlich beabstandeten Paare von Lichtflecken durchgeführten gemeinsamen Bewertungen oder eine Verknüpfung der für die wenigstens zwei unterschiedlich beabstandeten Paare von Lichtflecken durchgeführten gemeinsamen Bewertungen für eine Erkennung einer Objektkante herangezogen wird, sodass sich auf dem Objekt wenigstens zwei unterschiedliche Abstände zwischen zwei jeweiligen Lichtflecken ergeben.

Als Auswahlkriterium kann ein erwarteter Krümmungsradius einer Objektkante und/oder ein anhand der Empfangsintensitäten der durch den Lichtempfänger aufgenommenen Abbilder der Lichtflecke erzeugtes Gütesignal herangezogen werden.

Die Erkennung einer Objektkante kann bei einem erfindungsgemäßen Verfahren auf einem energetischen Wägeverfahren und/oder auf einem Abstandsdifferenzverfahren wie vorstehend beschrieben beruhen. Weiterhin kann bei einem erfindungsgemäßen Verfahren eine logische Verknüpfung zweier Ergebnisse von gemeinsamen Bewertungen durchgeführt werden.

Vorzugsweise erfolgt die Auswahl des Paars von Lichtsendern in Abhängigkeit eines Krümmungsradius einer erwarteten Objektkante.

Die Erfindung wird nachfolgend beispielhaft unter Bezugnahme auf die Zeichnungen beschrieben.
- Fig. 1: zeigt in vereinfachter Form einen erfindungsgemäßen optoelektronischen Sensor zur Erkennung von Objektkanten von Objekten.
- Fig. 2: zeigt einen Teil des Sensors gemäß Fig. 1 gemeinsam mit einem zu erkennenden Objekt, welches eine stark gekrümmte Objektkante aufweist.
- Fig. 3: zeigt einen Teil des Sensors gemäß Fig. 1 gemeinsam mit einem zu erkennenden Objekt, welches eine schwach gekrümmte Objektkante aufweist.
- Fig. 4: zeigt eine Anordnung von vier Lichtsendern eines erfindungsgemäßen optoelektronischen Sensors, welchen eine gemeinsame Sendelinse zugeordnet ist.
- Fig. 5: zeigt eine Anordnung von vier Lichtsendern eines erfindungsgemäßen optoelektronischen Sensors, welche auf einem zusammenhängenden Halbleiter-Chip angeordnet sind.
- Fig. 6: zeigt eine Anordnung von vier Lichtsendern eines erfindungsgemäßen optoelektronischen Sensors, welche auf getrennten Teilen eines geteilten Halbleiter-Chips angeordnet sind.

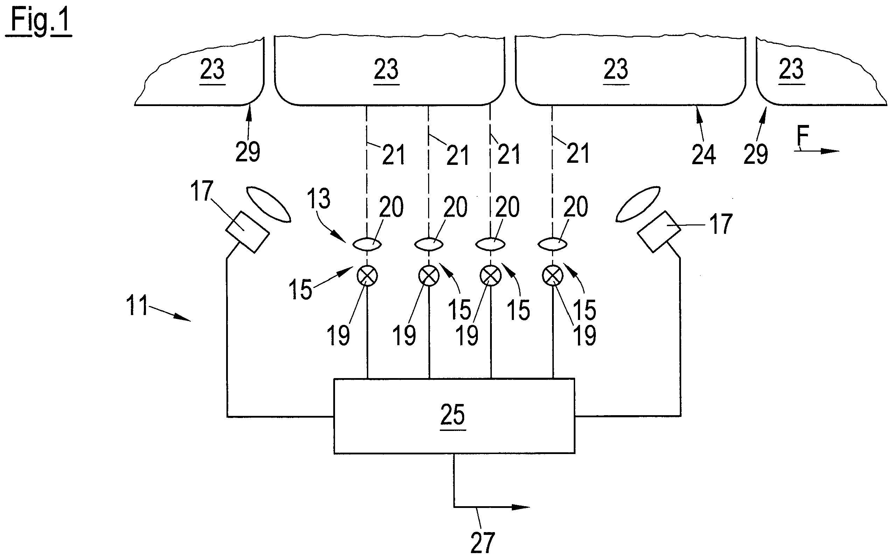

Der in Fig. 1-3 dargestellte optoelektronische Sensor 11 umfasst eine Lichtsendeeinrichtung 13 mit vier Lichtsendern 15 und zwei in einer Empfängerebene zumindest im Wesentlichen symmetrisch zu beiden Seiten, das heißt links und rechts der Lichtsendeeinrichtung 13 angeordnete Lichtempfänger 17. Jeder der vier Lichtsender 15 umfasst eine Lichtquelle 19 und eine Sendelinse 20. Folglich ist jeder der Lichtsender 15 dazu ausgebildet, einen kollimierten oder fokussierten Sendelichtstrahl 21 auszusenden. Die Sendelichtstrahlen 21 fallen wie dargestellt auf Objekte 23, die in einer Förderrichtung F an dem Sensor 11 vorbeibewegt werden, und erzeugen dort jeweilige Lichtflecke oder Spots. Die Sendelichtstrahlen 21 stehen dabei zumindest im Wesentlichen senkrecht auf den dem Sensor 11 zugewandten Stirnseiten 24 der Objekte 23, bei denen es sich beispielsweise um Getränkekartons handeln kann.

Eine elektronische Auswerteeinheit 25 des Sensors 11 ist dazu ausgebildet, die vier Lichtsender 15 unabhängig voneinander anzusteuern. Weiterhin empfängt die Auswerteeinheit 25 jeweilige Empfangssignale von den beiden Lichtempfängern 17. Die Auswerteeinheit 25 führt zum Erkennen einer Objektkante 29 eines Objekts 23 eine gemeinsame Bewertung jeweiliger durch die zwei Lichtempfänger 17 aufgenommener Abbilder eines durch die Sendelichtstrahlen 21 eines der Lichtsender 15 erzeugten Lichtflecks und jeweiliger durch die zwei Lichtempfänger 17 aufgenommener Abbilder eines durch die Sendelichtstrahlen 21 eines anderen Lichtsenders 15 erzeugten Lichtflecks durch. Beruhend auf dieser gemeinsamen Bewertung gibt die Auswerteeinheit 25 ein Objektfeststellungssignal 27 aus, das angibt, ob gerade eine Objektkante 29 an dem Sensor 11 vorbeibewegt wird. Die gemeinsame Bewertung kann anhand der Differenz der Intensitätssignale der beiden Lichtempfänger 17 vorgenommen werden und insbesondere ein energetisches Wägeverfahren umfassen, wie es in der DE 10 2010 022 273 A1 angegeben ist. Alternativ oder zusätzlich kann wenigstens ein ortsauflösender Lichtempfänger (nicht dargestellt) vorgesehen sein, welcher eine Ermittlung des Abstands zwischen dem Sensor 11 und den Stirnseiten 24 der Objekte 23 mittels des Triangulationsverfahrens gestattet. Das Vorliegen einer Objektkante 29 kann in diesem Fall durch eine Abstandsdifferenz detektiert werden, sofern zwei aufeinander folgende Objekte 23 in Richtung des Sensors 11 gesehen zueinander versetzt sind.

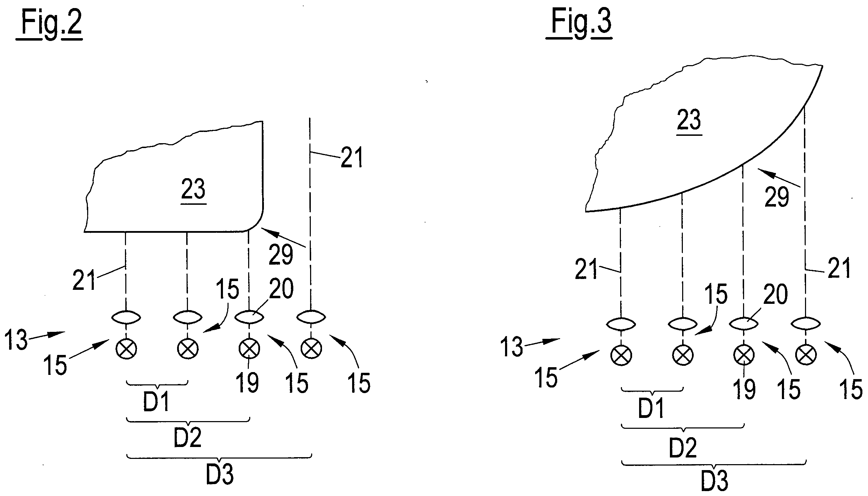

Die Effektivität der Kantenerkennung ist sowohl bei Durchführung eines energetischen Wägeverfahrens als auch bei Durchführung eines Abstandsdifferenzverfahrens in starkem Maße von dem Krümmungsradius der Objektkante 29 abhängig. Speziell eignen sich die genannten Verfahren im Wesentlichen für solche Objektkanten 29, bei welchen der Krümmungsradius und der Abstand zwischen den beiden für die gemeinsame Bewertung herangezogenen Lichtsendern 15 in der gleichen Größenordnung liegen. Der Sensor 11 ist daher derart ausgebildet, dass das für die gemeinsame Bewertung heranzuziehende Paar von Lichtsendern 15 in Abhängigkeit von dem Krümmungsradius aus allen möglichen Paaren von Lichtsendern 15 auswählbar ist. Bei der in den Fig. 1-3 dargestellten Konfiguration, gemäß welcher vier gleichmäßig beabstandete Lichtsender 15 geradlinig entlang einer quer zu der Objektkante 29 verlaufenden Linie angeordnet sind, sind drei unterschiedliche Abstände von Lichtsendern 15 möglich, nämlich D1, D2 = 2×D1 und D3 = 3×D1, wie in Fig. 2 und 3 verdeutlicht ist.

Während des Betriebs des Sensors 11 steuert die Auswerteeinheit 25 alle Lichtsender 15 zeitlich alternierend an. Es werden dann gleichzeitig oder nacheinander jeweilige gemeinsame Bewertungen für alle möglichen unterschiedlich beabstandeten Paare von Lichtsendern 15 durchgeführt. Zur Erkennung einer Objektkante 29 kann dann diejenige gemeinsame Bewertung herangezogen werden, für die der Abstand zwischen den Lichtsendern 15 am besten an den Krümmungsradius der Objektkante 29 angepasst ist. Die Auswerteeinheit 25 kann zur Erkennung einer Objektkante 29 auch eine logische Verknüpfung aller für die unterschiedlich beabstandeten Paare von Lichtsendern 15 durchgeführten gemeinsamen Bewertungen durchführen. Alternativ oder zusätzlich zu dem Krümmungsradius kann ein Gütesignal zur Auswahl desjenigen Paars von Lichtsendern 15 verwendet werden, welches anhand der Empfangsintensitäten der durch die zwei Lichtempfänger 17 aufgenommenen Abbilder der Lichtflecke erzeugt ist.

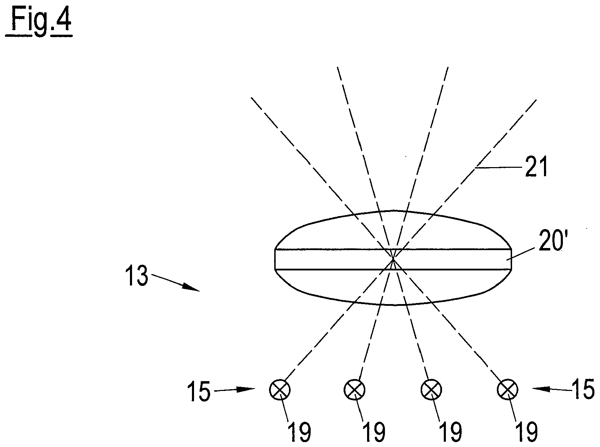

Bei der in den Fig. 1-3 dargestellten Ausführungsform eines erfindungsgemäßen Sensors 11 ist jedem der vier Lichtsender 15 eine separate Sendelinse 20 zugeordnet. Demgegenüber zeigt Fig. 4 eine Anordnung von vier Lichtsendern 15, denen eine gemeinsame Sendelinse 20' zugeordnet ist.

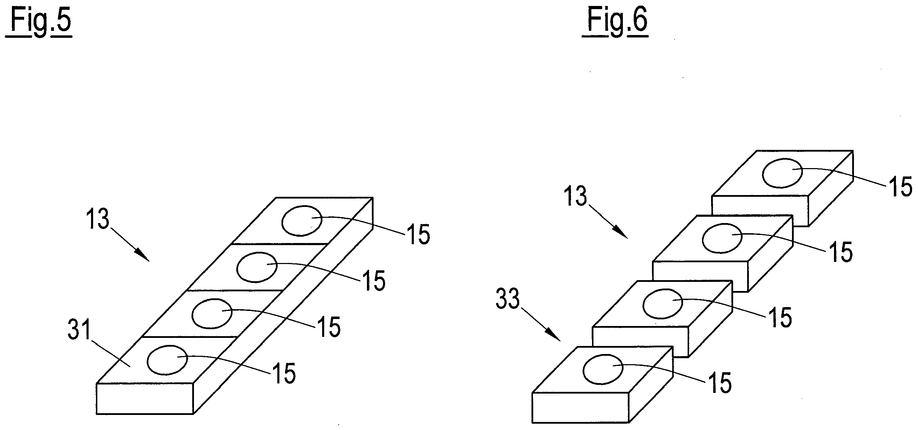

Grundsätzlich können die Lichtquellen 19 als Quasi-Punktlichtquellen in Form von Lasern, VCSEL-Elementen oder Leuchtdioden (LEDs) ausgeführt sein. Insbesondere können die vier Lichtsender 15 durch jeweilige Halbleiter-Lichtquellen gebildet sein, welche auf einem gemeinsamen Halbleiterkristall angeordnet sind. Fig. 5 zeigt eine derartige Ausführungsform, bei welcher die vier Lichtsender 15 als LED-Elemente auf einem einzelnen zusammenhängenden Halbleiter-Chip 31 vorgesehen sind. Ein Vorteil besteht hierbei in der erzielbaren hohen Präzision hinsichtlich der Position der erzeugten Lichtflecke. Fig. 6 zeigt demgegenüber eine Ausführungsform, bei welcher ein geteilter Halbleiter-Chip 33 vorgesehen ist, dessen Teile jeweils einen Lichtsender 15 in Form eines LED-Elements tragen. Diese Ausführungsform ist besonders kostengünstig herstellbar. Vorzugsweise umfassen die Lichtsender 15 sogenannte Punktstrahler-LEDs. Bei derartigen LEDs liegt eine kreisförmige Emissionsöffnung und eine relativ scharfe Lichtfleckbegrenzung vor. Zudem weist das Abbild des Lichtflecks keinen Bondkontakt auf. Abweichend von der in den Figuren dargestellten linearen Anordnung der vier Lichtsender 15 kommen auch sternförmige, ringförmige oder matrixförmige Anordnungen in Betracht.

Insgesamt ermöglicht die Erfindung das zuverlässige Erkennen von Objektkanten 29 unabhängig von deren Krümmungsradius.

### Bezugszeichenliste

- 11: optoelektronischer Sensor
- 13: Lichtsendeeinrichtung
- 15: Lichtsender
- 17: Lichtempfänger
- 19: Lichtquelle
- 20, 20': Sendelinse
- 21: Sendelichtstrahl
- 23: Objekt
- 24: Stirnseite
- 25: Auswerteeinheit
- 27: Objektfeststellungssignal
- 29: Objektkante
- 31: zusammenhängender Halbleiter-Chip
- 33: geteilter Halbleiter-Chip

- F: Förderrichtung
- R: Krümmungsradius
- D1-3: Abstand

## Patentansprüche

1. Optoelektronischer Sensor (11) zur Erkennung von Objektkanten (29) von Objekten (23),
mit wenigstens drei Lichtsendern (15) zur Erzeugung jeweiliger kollimierter oder fokussierter Sendelichtstrahlen (21), wobei die Lichtsender (15) derart angeordnet sind, dass sich wenigstens zwei unterschiedliche Abstände (D1, D2, D3) zwischen zwei jeweiligen Lichtsendern (15) der wenigstens drei Lichtsender (15) ergeben,
mit wenigstens einem Lichtempfänger (17) zur Aufnahme von durch die Sendelichtstrahlen (21) auf einem Objekt (23) erzeugten Lichtflecken, und
mit einer Auswerteeinheit (25), welche dazu ausgebildet ist,
zum Erkennen einer Objektkante (29) eine gemeinsame Bewertung
(i) eines durch einen Lichtempfänger (17) aufgenommenen Abbilds eines durch die Sendelichtstrahlen (21) eines ersten Lichtsenders (15) der wenigstens drei Lichtsender (15) erzeugten Lichtflecks und
(ii) eines durch einen Lichtempfänger (17) aufgenommenen Abbilds eines durch die Sendelichtstrahlen (21) eines anderen Lichtsenders (15) der wenigstens drei Lichtsender (15) erzeugten Lichtflecks durchzuführen,
**dadurch gekennzeichnet, dass** der Sensor (11) derart ausgebildet ist, das für die gemeinsame Bewertung heranzuziehende Paar von Lichtsendern (15) in Abhängigkeit von einem Auswahlkriterium aus wenigstens zwei unterschiedlich beabstandeten Paaren von Lichtsendern (15) auszuwählen.

2. Sensor nach Anspruch 1,
**dadurch gekennzeichnet,**
**dass** der Sensor (11) dazu ausgebildet ist, zum Erkennen einer Objektkante (29) gleichzeitig oder nacheinander jeweilige gemeinsame Bewertungen für wenigstens zwei unterschiedlich beabstandete Paare von Lichtsendern (15) durchzuführen.

3. Sensor nach Anspruch 2,
**dadurch gekennzeichnet,**
**dass** der Sensor (11) dazu ausgebildet ist, in Abhängigkeit von dem Auswahlkriterium, lediglich eine der durchgeführten gemeinsamen Bewertungen zur Erkennung einer Objektkante (29) heranzuziehen.

4. Sensor nach Anspruch 2,
**dadurch gekennzeichnet,**
**dass** der Sensor (11) dazu ausgebildet ist, jede der durchgeführten gemeinsamen Bewertungen zur Erkennung einer Objektkante (29) heranzuziehen.

5. Sensor nach Anspruch 4,
**dadurch gekennzeichnet,**
**dass** der Sensor (11) dazu ausgebildet ist, die Erkennung einer Objektkante (29) anhand einer logischen Verknüpfung der beiden für die zwei unterschiedlich beabstandeten Paare von Lichtsendern (15) durchgeführten gemeinsamen Bewertungen vorzunehmen.

6. Sensor nach einem der vorstehenden Ansprüche ,
**dadurch gekennzeichnet,**
**dass** das Auswahlkriterium einen erwarteten Krümmungsradius einer Objektkante (29) und/oder ein anhand der Empfangsintensitäten der durch den Lichtempfänger (17) aufgenommenen Abbilder der Lichtflecke erzeugtes Gütesignal umfasst.

7. Sensor nach einem der vorstehenden Ansprüche,
**dadurch gekennzeichnet,**
**dass** wenigstens vier und vorzugsweise genau vier voneinander beabstandete Lichtsender (15) vorgesehen sind, wobei die Auswerteeinheit (25) in der Lage ist, für wenigstens zwei unterschiedlich beabstandete Paare von Lichtsendern (15) eine jeweilige gemeinsame Bewertung durchzuführen.

8. Sensor nach einem der vorstehenden Ansprüche,
**dadurch gekennzeichnet,**
**dass** die Lichtsender (15) auf einer, vorzugsweise geraden, Linie angeordnet sind, wobei die Linie insbesondere quer zu einer erwarteten Objektkante (29) verläuft.

9. Sensor nach Anspruch 8,
**dadurch gekennzeichnet,**
**dass** die Lichtsender (15) in einem gleichmäßigen Abstand auf der Linie angeordnet sind.

10. Sensor nach einem der vorstehenden Ansprüche,
**dadurch gekennzeichnet,**
**dass** jedem der wenigstens drei Lichtsender (15) eine separate Sendeoptik (20), insbesondere Sendelinse, zugeordnet ist.

11. Sensor nach einem der vorstehenden Ansprüche,
**dadurch gekennzeichnet,**
**dass** den wenigstens drei Lichtsendern (15) eine gemeinsame Sendeoptik (20'), insbesondere Sendelinse, zugeordnet ist.

12. Sensor nach einem der vorstehenden Ansprüche,
**dadurch gekennzeichnet,**
**dass** die wenigstens drei Lichtsender (15) durch jeweilige Halbleiter-Lichtquellen gebildet sind, welche auf einem gemeinsamen Halbleiterkristall (31, 33) angeordnet sind.

13. Sensor nach zumindest einem der vorstehenden Ansprüche,
**dadurch gekennzeichnet,**
**dass** der Sensor (11) dazu ausgebildet ist, die wenigstens drei Lichtsender (15) alternierend anzusteuern.

14. Verfahren zur Erkennung von Objektkanten (29) von Objekten (23), bei dem
gleichzeitig oder nacheinander wenigstens zwei Lichtflecke auf einem Objekt (23) erzeugt werden,
die Abbilder der erzeugten Lichtflecke mittels wenigstens eines Lichtempfängers (17) aufgenommen werden und
(i) ein durch einen Lichtempfänger (17) aufgenommenes Abbild eines ersten Lichtflecks der wenigstens zwei Lichtflecke und
(ii) ein durch einen Lichtempfänger (17) aufgenommenes Abbild eines anderen Lichtflecks der wenigstens zwei Lichtflecke
gemeinsam bewertet werden,
wobei die Lichtflecke durch ein Paar von Lichtsendern (15) einer Anordnung von wenigstens drei Lichtsendern (15) erzeugt werden, welche derart angeordnet sind, dass sich wenigstens zwei unterschiedliche Abstände (D 1, D2, D3) zwischen zwei jeweiligen Lichtsendern (15) der wenigstens drei Lichtsender (15) ergeben,
**dadurch gekennzeichnet, dass**
das Paar von Lichtsendern (15) in Abhängigkeit von einem Auswahlkriterium aus wenigstens zwei unterschiedlich beabstandeten Paaren von Lichtsendern (15) ausgewählt wird.

15. Verfahren nach Anspruch 14,
**dadurch gekennzeichnet,**
**dass** als Auswahlkriterium ein erwarteter Krümmungsradius einer Objektkante (29) und/oder ein anhand der Empfangsintensitäten der durch den Lichtempfänger (17) aufgenommenen Abbilder der Lichtflecke erzeugtes Gütesignal herangezogen wird.

## Claims

1. An optoelectronic sensor (11) for recognizing object edges (29) of objects (23),
comprising at least three light transmitters (15) for generating respective collimated or focused transmitted light beams (21), wherein the light transmitters (15) are arranged such that at least two different spacings (D1, D2, D3) result between two respective light transmitters (15) of the at least three light transmitters (15);
comprising at least one light receiver (17) for taking light spots generated by the transmitted light beams (21) on an object (23); and comprising an evaluation unit (25) which is configured,
for the recognition of an object edge (29), to carry out a common evaluation
(i) of an image taken by a light receiver (17) of a light spot generated by the transmitted light beams (21) of a first light transmitter (15) of the at least three light transmitters (15); and
(ii) of an image taken by a light receiver (17) of a light spot generated by the transmitted light beams (21) of another light transmitter (15) of the at least three light transmitters (15),
**characterized in that**
the sensor (11) is configured to select the pair of light transmitters (15) to be used for the common evaluation in dependence on a selection criterion from at least two differently spaced apart pairs of light transmitters (15).

2. A sensor in accordance with claim 1,
**characterized in that**,
for the recognition of an object edge (29), the sensor (11) is configured to carry out respective common evaluations simultaneously or consecutively for at least two differently spaced apart pairs of light transmitters (15).

3. A sensor in accordance with claim 2,
**characterized in that**
the sensor (11) is configured to use only one of the carried out common evaluations for recognizing an object edge (29) in dependence on the selection criterion.

4. A sensor in accordance with claim 2,
**characterized in that**
the sensor (11) is configured to use each of the carried out common evaluations for recognizing an object edge (29).

5. A sensor in accordance with claim 4,
**characterized in that**
the sensor (11) is configured to carry out the recognition of an object edge (29) with reference to a logical link of the two common evaluations carried out for the two differently spaced apart pairs of light transmitters (15).

6. A sensor in accordance with any one of the preceding claims,
**characterized in that**
the selection criterion comprises an expected radius of curvature of an object edge (29) and/or a quality signal generated with reference to the reception intensities of the images of the light spots taken by the light receiver (17).

7. A sensor in accordance with any one of the preceding claims,
**characterized in that**
at least four, and preferably exactly four, light transmitters (15) spaced apart from one another are provided, with the evaluation unit (25) being able to carry out a respective common evaluation for at least two differently spaced apart pairs of light transmitters (15).

8. A sensor in accordance with any one of the preceding claims,
**characterized in that**
the light transmitters (15) are arranged on a line, preferably a straight line, with the line in particular extending transversely to an expected object edge (29).

9. A sensor in accordance with claim 8,
**characterized in that**
the light transmitters (15) are arranged at a uniform spacing on the line.

10. A sensor in accordance with any one of the preceding claims,
**characterized in that**
a separate transmission optics (20), in particular a transmission lens, is associated with each of the at least three light transmitters (15).

11. A sensor in accordance with any one of the preceding claims,
**characterized in that**
a common transmission optics (20'), in particular a transmission lens, is associated with the at least three light transmitters (15).

12. A sensor in accordance with any one of the preceding claims,
**characterized in that**
the at least three light transmitters (15) are formed by respective semiconductor light sources which are arranged on a common semiconductor crystal (31, 33).

13. A sensor in accordance with at least one of the preceding claims,
**characterized in that**
the sensor (11) is configured to control the at least three light transmitters (15) alternatingly.

14. A method of recognizing object edges (29) of objects (23), in which at least two light spots are generated on an object (23) simultaneously or consecutively;
the images of the generated light spots are taken by means of at least one light receiver (17); and
(i) an image taken by a light receiver (17) of a first light spot of the at least two light spots and
(ii) an image taken by a light receiver (17) of another light spot of the at least two light spots
are jointly evaluated,
wherein the light spots are generated by a pair of light transmitters (15) of an arrangement of at least three light transmitters (15) which are arranged such that at least two different spacings (D1, D2, D3) result between two respective light transmitters (15) of the at least three light transmitters (15),
**characterized in that**
the pair of light transmitters (15) is selected in dependence on a selection criterion from at least two differently spaced apart pairs of light transmitters (15).

15. A method in accordance with claim 14,
**characterized in that**
an expected radius of curvature of an object edge (29) and/or a quality signal generated with reference to the reception intensities of the images of the light spots taken by the light receiver (17) is/are used as a selection criterion.

## Revendications

1. Capteur optoélectronique (11) pour reconnaître des arêtes (29) d'objets (23),
comportant au moins trois émetteurs de lumière (15) pour générer des rayons lumineux d'émission (21) respectifs collimatés ou focalisés, dans lequel
les émetteurs de lumière (15) sont agencés de telle sorte qu'il en résulte au moins deux distances différentes (D1, D2, D3) entre deux émetteurs de lumière respectifs (15) parmi lesdits au moins trois émetteurs de lumière (15), comportant au moins un récepteur de lumière (17) pour recevoir des taches lumineuses générées par les rayons lumineux d'émission (21) sur un objet (23), et
comportant une unité d'évaluation (25) qui, en vue de reconnaître une arête d'objet (29), est réalisée pour mettre en oeuvre une évaluation commune
(i) d'une image, prise par un récepteur de lumière (17), d'une tache lumineuse générée par les rayons lumineux d'émission (21) d'un premier émetteur de lumière (15) parmi lesdits au moins trois émetteurs de lumière (15), et
(ii) d'une image, prise par un récepteur de lumière (17), d'une tache lumineuse générée par les rayons lumineux d'émission (21) d'un autre émetteur de lumière (15) parmi lesdits au moins trois émetteurs de lumière (15),
**caractérisé en ce que**
le capteur (11) est réalisé pour sélectionner la paire d'émetteurs de lumière (15), à considérer pour l'évaluation commune, parmi au moins deux paires d'émetteurs de lumière (15) ayant des distances différentes, en fonction d'un critère de sélection.

2. Capteur selon la revendication 1,
**caractérisé en ce que**
le capteur (11) est réalisé pour mettre en oeuvre, en vue de reconnaître une arête d'objet (29), simultanément ou successivement des évaluations communes respectives pour au moins deux paires d'émetteurs de lumière (15) ayant des distances différentes.

3. Capteur selon la revendication 2,
**caractérisé en ce que**
le capteur (11) est réalisé pour considérer, en fonction du critère de sélection, uniquement l'une des évaluations communes mises en oeuvre pour reconnaître une arête d'objet (29).

4. Capteur selon la revendication 2,
**caractérisé en ce que**
le capteur (11) est réalisé pour considérer chacune des évaluations communes mises en oeuvre pour reconnaître une arête d'objet (29).

5. Capteur selon la revendication 4,
**caractérisé en ce que**
le capteur (11) est réalisé pour mettre en oeuvre la reconnaissance d'une arête d'objet (29) en se basant sur une combinaison logique des deux évaluations communes mises en oeuvre pour les deux paires d'émetteurs de lumière (15) ayant des distances différentes.

6. Capteur selon l'une des revendications précédentes,
**caractérisé en ce que**
le critère de sélection inclut un rayon de courbure attendu d'une arête d'objet (29) et/ou un signal de qualité généré sur la base des intensités de réception des images des taches lumineuses, prises par le récepteur de lumière (17).

7. Capteur selon l'une des revendications précédentes,
**caractérisé en ce que**
il est prévu au moins quatre et de préférence précisément quatre émetteurs de lumière (15) espacés les uns des autres, l'unité d'évaluation (25) étant capable de mettre en oeuvre une évaluation commune respective pour au moins deux paires d'émetteurs de lumière (15) ayant des distances différentes.

8. Capteur selon l'une des revendications précédentes,
**caractérisé en ce que**
les émetteurs de lumière (15) sont agencés sur une ligne de préférence droite, la ligne s'étendant en particulier transversalement à une arête d'objet (29) attendue.

9. Capteur selon la revendication 8,
**caractérisé en ce que**
les émetteurs de lumière (15) sont agencés sur la ligne à une distance régulière.

10. Capteur selon l'une des revendications précédentes,
**caractérisé en ce que**
une optique d'émission (20) séparée, en particulier une lentille d'émission séparée, est associée à chacun desdits au moins trois émetteurs de lumière (15).

11. Capteur selon l'une des revendications précédentes,
**caractérisé en ce que**
une optique d'émission (20') commune, en particulier une lentille d'émission commune, est associée auxdits au moins trois émetteurs de lumière (15).

12. Capteur selon l'une des revendications précédentes,
**caractérisé en ce que**
lesdits au moins trois émetteurs de lumière (15) sont formés par des sources de lumière semi-conductrices respectives qui sont agencées sur un cristal semi-conducteur commun (31, 33).

13. Capteur selon l'une des revendications précédentes,
**caractérisé en ce que**
le capteur (11) est réalisé pour piloter en alternance lesdits au moins trois émetteurs de lumière (15).

14. Procédé pour reconnaître des arêtes (29) d'objets (23),
dans lequel
au moins deux taches lumineuses sont générées simultanément ou successivement sur un objet (23),
les images des taches lumineuses sont prises au moyen d'au moins un récepteur de lumière (17), et
(i) une image, prise par un récepteur de lumière (17), d'une première tache lumineuse parmi lesdites au moins deux taches lumineuses, et
(ii) une image, prise par un récepteur de lumière (17), d'une autre tache lumineuse parmi lesdites au moins deux taches lumineuses sont évaluées conjointement,
dans lequel les taches lumineuses sont générées par une paire d'émetteurs de lumière (15) d'un agencement d'au moins trois émetteurs de lumière (15), qui sont agencés de telle sorte qu'il en résulte au moins deux distances différentes (D1, D2, D3) entre deux émetteurs de lumière respectifs (15) parmi lesdits au moins trois émetteurs de lumière (15),
**caractérisé en ce que**
la paire d'émetteurs de lumière (15) est sélectionnée parmi au moins deux paires d'émetteurs de lumière (15) ayant des distances différentes, en fonction d'un critère de sélection.

15. Procédé selon la revendication 14,
**caractérisé en ce que**
le critère de sélection à considérer inclut un rayon de courbure attendu d'une arête d'objet (29) et/ou un signal de qualité généré sur la base des intensités de réception des images des taches lumineuses, prises par le récepteur de lumière (17).
